(19) Europäisches Patentamt
European Patent Office
Office européen des brevets

(11) **EP 3 062 072 B1**

(12) **FASCICULE DE BREVET EUROPEEN**

(45) Date de publication et mention de la délivrance du brevet:
**23.10.2019 Bulletin 2019/43**

(51) Int Cl.:
***G01G 19/44*** *(2006.01)*

(21) Numéro de dépôt: **16163901.8**

(22) Date de dépôt: **31.03.2010**

(54) **PROCEDE ET DISPOSITIF DE PESAGE**

WIEGEVERFAHREN UND -VORRICHTUNG

WEIGHING METHOD AND DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.04.2009 FR 0952613**

(43) Date de publication de la demande:
**31.08.2016 Bulletin 2016/35**

(62) Numéro(s) de document de la (des) demande(s) initiale(s) en application de l'article 76 CBE:
**10717706.5 / 2 422 170**

(73) Titulaire: **Withings**
**92130 Issy-les-Moulineaux (FR)**

(72) Inventeurs:
• **HUTCHINGS, Cédric**
**Brookline, MA 02446 (US)**
• **CARREEL, Eric**
**92190 Meudon (FR)**

(74) Mandataire: **Cabinet Plasseraud**
**66, rue de la Chaussée d'Antin**
**75440 Paris Cedex 09 (FR)**

(56) Documents cités:
**EP-A1- 1 239 268     WO-A1-2007/102708**
**US-A- 6 038 465      US-A1- 2002 179 338**

## Description

La présente invention est relative aux procédés et dispositifs de pesage.

Plus particulièrement, l'invention concerne le domaine des pèse-personnes électroniques. Ces appareils sont devenus de plus en plus sophistiqués : à titre d'exemple, certains modèles, dotés de fonctions de mesure d'impédance, permettent de mesurer non seulement la masse de l'utilisateur, mais également d'autres paramètres tels que le taux de graisse, de matière maigre, d'hydratation, l'indice de masse de masse corporelle, etc. Cette sophistication entraîne une complexité de l'afficheur et des boutons de commande du pèse-personne, ce qui est peu pratique compte tenu du fait que le pèse-personne est disposé sur le sol.

Pour rendre les pèse-personnes plus ergonomiques, on peut utiliser des dispositifs de pesage comportant un pèse-personne communiquant avec une liaison sans fil avec une interface utilisateur déportée, et c'est à ce type de pèse-personne que se rapporte plus spécialement l'invention.

Le document US-B-6 781 067 décrit un exemple d'un tel pèse-personne, dans lequel le dispositif d'interface est un appareil spécifique fixé au mur, qui communique avec le pèse-personne par une liaison dédiée unidirectionnelle.

Un autre document pertinent est EP 1 239 268 A1.

La présente invention a notamment pour but de perfectionner les pèse-personnes de ce type, notamment pour en améliorer l'ergonomie.

A cet effet, l'invention propose notamment un procédé de pesage utilisant un pèse-personne électronique communiquant avec un terminal mobile de télécommunication doté d'un écran d'affichage, le pèse-personne et le terminal mobile communiquant tous deux par voie hertzienne avec un réseau de télécommunication, ledit réseau de télécommunication étant adapté pour faire communiquer au moins le terminal mobile avec au moins un dispositif de télécommunication supplémentaire, le procédé comprenant les étapes suivantes :

(a) au moins une étape de pesée au cours de laquelle le pèse-personne effectue au moins une mesure représentative au moins de la masse de l'utilisateur,
(b) au moins une étape de communication bidirectionnelle au cours de laquelle :

- un utilisateur entre des données dans le terminal mobile, et le terminal mobile transmet lesdites informations au pèse-personne par l'intermédiaire du réseau de télécommunication,
- le pèse-personne transmet au terminal mobile, des données de pesage fonction de ladite mesure, par le réseau de télécommunication,

(c) et au moins une étape d'affichage au cours de laquelle, le terminal mobile affiche sur l'écran, des informations fonction des données de pesage transmises à l'étape de communication, et dans lequel, au cours de l'étape de pesée, le pèse-personne cherche à faire correspondre automatiquement l'utilisateur avec au moins un profil d'utilisateur prédéterminé pour déterminer lesdites données de pesage en utilisant au moins une loi prédéterminée dépendant du profil d'utilisateur.

Grâce à ces dispositions, on met à profit les fonctionnalités de l'interface utilisateur du terminal mobile, qui sont préexistantes et très riches, et on met également à profit les capacités de communication préexistantes du terminal mobile. On obtient ainsi, à moindre coût, un procédé de pesage qui est particulièrement ergonomique pour l'utilisateur. On notera que la communication de données vers le pèse-personne n'est pas nécessaire à chaque utilisation du pèse-personne par un même utilisateur ; au contraire, cette communication peut éventuellement être limitée à une étape initiale de configuration qu'un même utilisateur ne réalise qu'une fois à la première utilisation du pèse-personne, ou une fois de temps à autres.

De plus, compte tenu des possibilités de communication offertes par le réseau de télécommunication, le procédé selon l'invention rend possible d'accéder à des ressources externes, notamment pour enrichir les fonctionnalités offertes à l'utilisateur ou pour enrichir les données de pesage présentées à l'utilisateur en cours de pesage ou postérieurement.

Dans des modes de réalisation du procédé selon l'invention, on peut éventuellement avoir recours en outre à l'une et/ou à l'autre des dispositions suivantes :

- au cours de l'étape de pesée (a), on effectue également une mesure impédancemétrique sur l'utilisateur, et au cours de l'étape de communication, les données entrées par l'utilisateur dans le terminal mobile comprennent un profil d'utilisateur et les données de pesage transmises par le pèse-personne au terminal mobile comprennent une masse et des données impédancemétriques fonction du profil d'utilisateur ;
- le profil d'utilisateur comprend l'âge, la taille et le sexe de l'utilisateur ;
- ledit réseau de télécommunication comporte un réseau distant et au cours de l'étape de communication, on transmet lesdites données de pesage à un serveur par ledit réseau distant ;
- au cours de l'étape de communication, le pèse-personne transmet au terminal mobile, en temps réel, lesdites données de pesage fonction de ladite mesure, par le réseau de télécommunication, et au cours de l'étape d'affichage (d), le terminal mobile affiche en temps réel sur l'écran, pendant que l'utilisateur est sur le pèse-personne, lesdites informations fonction des données de pesage transmises à l'étape de communication montante ;
- le terminal mobile utilisé est un téléphone mobile ;
- le réseau de télécommunication comprend au moins un réseau local sans fil auquel appartient le pèse-personne et au cours de l'étape de communication, le pèse-personne transmet lesdites données de pesage au terminal mobile par l'intermédiaire dudit réseau local sans fil ;
- ledit réseau local sans fil fonctionne selon un protocole de communication choisi parmi les protocoles WIFI et BLUETOOTH ;
- le terminal mobile appartient également au réseau local sans fil et au cours de l'étape de communication, le pèse-personne transmet lesdites données de pesage au terminal mobile uniquement par l'intermédiaire dudit réseau local sans fil ;
- le réseau local comporte en outre une plateforme qui communique au moins avec le pèse-personne, et au cours de l'étape de communication, le pèse-personne transmet lesdites données de pesage au terminal mobile par l'intermédiaire de la plateforme ;
- ledit réseau de télécommunication comporte en outre un réseau distant distinct du réseau local sans fil, la plateforme communique avec au moins un serveur par l'intermédiaire dudit réseau distant, le terminal mobile communiquant également avec ledit serveur par l'intermédiaire du réseau distant, et au cours de l'étape de communication, le pèse-personne transmet lesdites données de pesage au terminal mobile par l'intermédiaire dudit serveur, par ledit réseau distant ;
- au cours de l'étape de communication, le serveur transmet des informations supplémentaires au terminal mobile en plus desdites données de pesage, par ledit réseau distant ;
- au cours de l'étape de communication, le serveur communique avec le terminal mobile par l'intermédiaire de la plateforme ;
- au cours de l'étape de communication, le serveur communique avec le terminal mobile directement par le réseau distant sans passer par la plateforme ;
- l'étape de communication comporte une communication bidirectionnelle entre le pèse-personne et le terminal mobile ;
- au cours de l'étape de pesée, le pèse-personne cherche à faire correspondre automatiquement l'utilisateur avec au moins un profil d'utilisateur prédéterminé pour déterminer lesdites données de pesage en utilisant au moins une loi prédéterminée dépendant du profil d'utilisateur, et au cours de l'étape de communication, si l'utilisateur n'est pas un utilisateur habituel du pèse-personne, ledit utilisateur s'identifie comme invité sur le terminal mobile et le pèse-personne cesse alors de rechercher à faire correspondre automatiquement l'utilisateur avec un profil d'utilisateur prédéterminé ;
- si ledit utilisateur s'identifie comme invité sur le terminal mobile, alors le terminal mobile lui propose de sélectionner un profil d'utilisateur dans une liste préexistante, et après choix d'un profil d'utilisateur, ce profil est transmis au pèse-personne pour déterminer lesdites données de pesage en utilisant au moins une loi prédéterminée dépendant du profil d'utilisateur sélectionné ;
- le pèse-personne utilisé comporte un écran et le procédé présente une étape préliminaire d'association au cours de laquelle on fait afficher un code sur l'écran du pèse-personne, l'utilisateur saisit ledit code sur une interface d'entrée appartenant au terminal mobile, puis on fait envoyer ledit code par le pèse-personne au serveur par l'intermédiaire de la plateforme et on fait envoyer le code saisi sur l'interface d'entrée par le terminal mobile audit serveur, après quoi le serveur vérifie s'il y a correspondance entre le code reçu du pèse-personne et le code reçu du terminal mobile, et s'il y a correspondance, le serveur fait associer le pèse-personne au terminal mobile dans le réseau local sans fil ;
- au moins une étape de mise à jour au cours de laquelle le serveur met à jour un logiciel dans le pèse-personne ;
- les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure, et au cours de ladite étape de mise à jour, le serveur localise géographiquement le pèse-personne en utilisant des fonctionnalités de géolocalisation du réseau distant, et met à jour ledit paramètre de calcul de la masse de l'utilisateur en fonction de ladite localisation géographique ;
- les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure, ladite mesure représentative de la masse de l'utilisateur étant effectuée par au moins une jauge de contrainte appartenant au pèse-personne, et au cours de ladite étape de mise à jour, le serveur met à jour ledit paramètre de calcul de la masse de l'utilisateur en fonction de données statistiques relatives aux pèse-personnes en service ;
- les données de pesage comprennent des données impédancemétriques calculées à partir de mesures d'impédance effectuées par le pèse-personne, en utilisant au moins une loi de calcul prédéterminée, et au cours de ladite étape de mise à jour, le serveur met à jour ladite loi de calcul ;
- les données de pesage obtenues au cours de l'étape de mesure sont horodatées, et le procédé comprend une étape de mise à l'heure au cours de laquelle on met à jour une horloge interne appartenant au pèse-personne en utilisant des fonctionnalités de mise à l'heure disponibles dans ledit réseau de télécommunication ;

- au cours de l'étape de mesure, le pèse-personne fait effectuer un nombre n de mesures par n jauges de contrainte appartenant audit pèse-personne, et les données de pesage comprennent la masse de l'utilisateur, calculée selon une relation prédéterminée en fonction des n mesures des jauges de contraintes, le procédé comprenant une étape d'étalonnage au cours de laquelle on pose successivement une masse connue au moins n fois sur le pèse-personne, respectivement en n endroits différents et on mémorise à chaque fois les n mesures des jauges de contraintes, puis on détermine ladite relation prédéterminée à partir des mesures ainsi effectuées.

Par ailleurs, l'invention a également pour objet un dispositif de pesage comprenant :

- un pèse-personne électronique (1) adapté pour effectuer au moins une mesure représentative d'au moins la masse d'un utilisateur (U) placé sur ledit pèse-personne,
- un terminal mobile (2) de télécommunication doté d'un écran d'affichage,

le pèse-personne et le terminal mobile communiquant tous deux par voie hertzienne avec un réseau de télécommunication adapté pour faire communiquer au moins le terminal mobile avec au moins un dispositif de télécommunication supplémentaire, le pèse-personne étant adapté pour transmettre au terminal mobile, des données de pesage fonction de ladite mesure, par le réseau de télécommunication, et le terminal mobile étant adapté pour :

- transmettre au pèse-personne, par l'intermédiaire du réseau de télécommunication, des données entrées dans le terminal mobile par l'utilisateur,
- et afficher en temps réel sur l'écran, des informations fonction des données de pesage transmises par le pèse-personne.

Dans des modes de réalisation du dispositif selon l'invention, on peut éventuellement avoir recours en outre à l'une et/ou à l'autre des dispositions suivantes :

- le pèse personne est adapté pour effectuer une mesure impédancemétrique sur l'utilisateur, les données de pesage comprenant une masse de l'utilisateur et des données impédancemétriques, le terminal mobile étant adapté :

  - pour que l'utilisateur entre un profil d'utilisateur
  - et pour transmettre ce profil d'utilisateur au pèse-personne,
    le pèse-personne étant adapté pour déterminer lesdites données impédancemétriques en fonction dudit profil d'utilisateur ;

- le profil d'utilisateur comprend l'âge, la taille et le sexe de l'utilisateur ;
- ledit réseau de télécommunication comporte un réseau distant et le pèse-personne est adapté pour transmettre lesdites données de pesage à un serveur par ledit réseau distant ;
- le terminal mobile utilisé est un téléphone mobile ;
- le réseau de télécommunication comprend au moins un réseau local sans fil auquel appartient le pèse-personne, le pèse-personne étant adapté pour transmettre lesdites données de pesage au terminal mobile par l'intermédiaire dudit réseau local sans fil ;
- ledit réseau local sans fil fonctionne selon un protocole de communication choisi parmi les protocoles WIFI et BLUETOOTH ;
- le terminal mobile appartient également au réseau local sans fil et le pèse-personne est adapté pour transmettre lesdites données de pesage au terminal mobile uniquement par l'intermédiaire dudit réseau local sans fil ;
- le réseau local comporte en outre une plateforme qui communique au moins avec le pèse-personne, et ledit réseau de télécommunication comporte en outre un réseau distant distinct du réseau local sans fil, la plateforme communiquant avec au moins un serveur par l'intermédiaire dudit réseau distant (5), le terminal mobile communiquant également avec ledit serveur par l'intermédiaire du réseau distant.

D'autres caractéristiques et avantages de l'invention apparaîtront au cours de la description suivante d'une de ses formes de réalisation, donnée à titre d'exemple non limitatif, en regard des dessins joints.

Sur les dessins :

- la figure 1 est une vue en perspective montrant un exemple de dispositif de pesage selon une forme de réalisation, comprenant un pèse-personne et un terminal mobile,
- la figure 2 est un schéma bloc illustrant certains composants des appareils appartenant au dispositif de pesage de la figure 1,
- la figure 3 montre un exemple de page écran pouvant être affichée par le terminal mobile du dispositif de pesage des figures 1 et 2, lors d'une étape initiale d'association entre le pèse-personne et le terminal mobile,
- la figure 4 montre un exemple de page écran pouvant être affichée par le terminal mobile du dispositif de pesage des figures 1 et 2, lors du pesage d'un utilisateur,
- et la figure 5 montre un exemple de page écran pouvant être affichée par le terminal mobile du dispositif de pesage des figures 1 et 2, lors de l'entrée du profil utilisateur d'un utilisateur invité.

Sur les différentes figures, les mêmes références désignent des éléments identiques ou similaires.

4

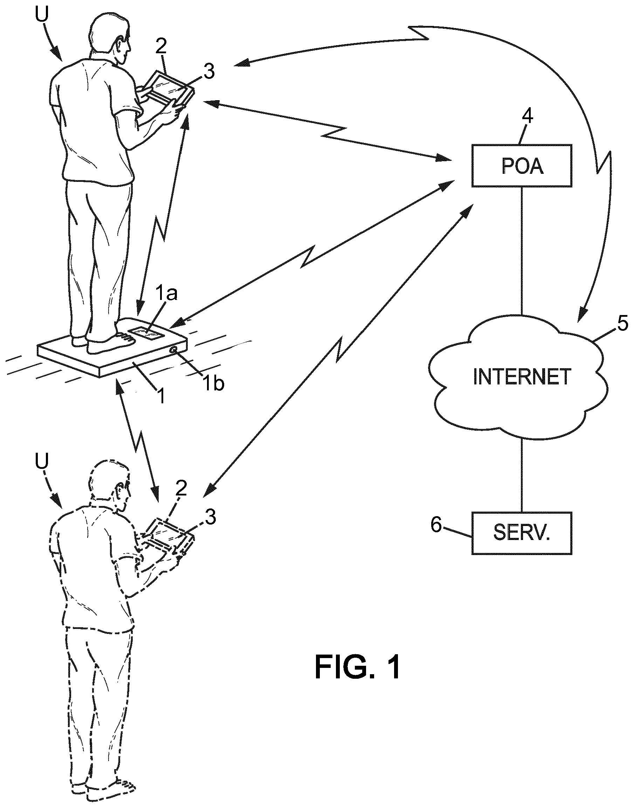

La figure 1 représente un exemple de dispositif de pesage selon une forme de réalisation de l'invention.

Ce dispositif de pesage comporte, dans tous les cas, un pèse-personne électronique 1 sur lequel peut se placer un utilisateur U pour mesurer notamment son poids, et un terminal mobile de télécommunication 2, doté d'un écran 3.

Le terminal mobile 2 en question peut classiquement être un téléphone mobile, mais pourrait également être constitué par tout autre appareil mobile portatif de type organiseur personnel ("PDA") ou autre, doté de capacités de communication radio.

Le pèse-personne 1 peut être par exemple un pèse - personne impédancemètre, adapté pour mesurer non seulement le poids de l'utilisateur U, mais également pour effectuer des masures d'impédance par la plante des pieds de l'utilisateur pour déterminer des paramètres tels que le taux de graisse, de matière maigre, d'hydratation, l'indice de masse de masse corporelle, etc. Le pèse-personne 1 est pourvu de moyens de communication radio.

Le terminal mobile 2 peut ainsi communiquer avec le pèse-personne 1 de façon bidirectionnelle au cours du pesage de l'utilisateur U, en faisant communiquer par voie hertzienne le pèse-personne 1 et le terminal mobile 2 avec un même réseau de télécommunication, homogène ou hétérogène.

Dans l'exemple particulier de la figure 1, le réseau de télécommunication susmentionné est un réseau hétérogène comprenant :

- d'une part, un réseau local sans fil fonctionnant par exemple selon le protocole WIFI (norme IEEE 802.11x) ou selon le protocole BLUETOOTH, ou autre,
- et, d'autre part, un réseau distant, en l'occurrence le réseau Internet 5, qui est relié au réseau local susmentionné par une plateforme 4 (POA) appartenant elle-même au réseau local sans fil. La plateforme 4 peut être constituée par toute passerelle connue fonctionnant en réseau local sans fil et formant un point d'accès Internet.

Le pèse-personne 1 et le terminal mobile 2 peuvent ainsi communiquer avec au moins un serveur distant 6 par l'intermédiaire du réseau Internet 5.

On notera que le terminal mobile 2 peut être pourvu de fonctionnalités lui donnant accès directement au réseau Internet, en utilisant par exemple une liaison radio de téléphonie de troisième génération (par exemple une liaison UMTS) ou supérieure, de sorte que le terminal mobile 2 peut éventuellement accéder au serveur 6 sans passer par l'intermédiaire de la plateforme 4.

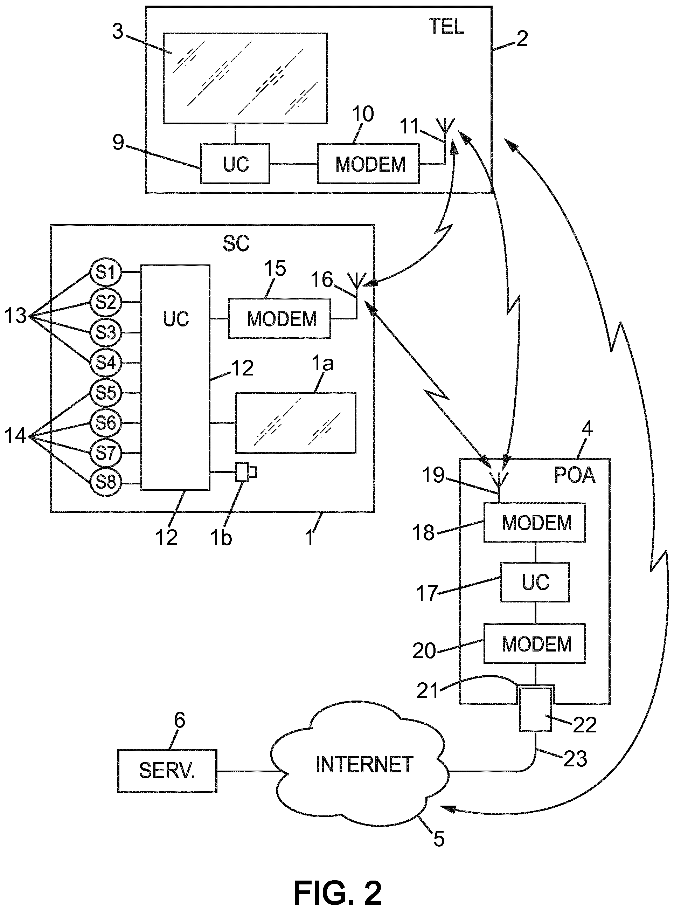

Comme représenté plus en détail sur la figure 2, le téléphone mobile 2 (TEL) peut comporter par exemple une unité centrale 9 (UC) telle qu'un microprocesseur ou similaire, commandant :

- l'écran 3,
- au moins un modem 10 relié à au moins une antenne 11 de radiocommunication pour communiquer soit avec le réseau local sans fil (par exemple en mode WIFI), soit directement avec le réseau Internet 5 (par exemple en mode UMTS).

L'écran 3 peut être un écran tactile servant d'interface d'entrée, ou bien le terminal mobile peut disposer d'un terminal d'entrée séparé tel qu'un clavier (non représenté), relié également à l'unité centrale 9.

Le pèse-personne 1 (SC) comporte, quant à lui, une unité centrale électronique 12 (UC) telle qu'un microprocesseur ou similaire, qui est reliée à :

- au moins un capteur de poids 13, par exemple à un nombre n de capteurs de poids S1-S4 tels que des jauges de contrainte, n pouvant par exemple être égal à 4,
- un ou plusieurs capteurs d'impédance 14 (S5-S8) pouvant effectuer des mesures d'impédance à partir de la plante des pieds de l'utilisateur U,
- un modem 15 relié à au moins une antenne 16 de radiocommunication pouvant communiquer avec le réseau local sans fil susmentionné,
- le cas échéant, un écran d'affichage 1a,
- et le cas échéant, un bouton d'association 1b dont l'utilité sera vue plus loin.

La plateforme 4, quant à elle, comporte une unité centrale électronique 17 (UC) tel qu'un microprocesseur ou similaire, qui est reliée :

- à un modem 18 adapté pour communiquer avec le réseau local sans fil au moyen d'une antenne 19,
- et à un modem supplémentaire 20, par exemple un modem ADSL, doté d'une prise de connexion 21 pouvant être reliée au connecteur 22 d'un câble 23 relié au réseau téléphonique pour accéder au réseau Internet 5.

Le dispositif qui vient d'être décrit peut fonctionner comme suit.

**Etalonnage initial du pèse-personne**

Avant toute mise en fonction du pèse-personne 1, on peut éventuellement effectuer une étape d'étalonnage de ce pèse-personne, soit en usine, soit chez l'utilisateur.

A titre d'exemple, l'unité centrale 12 du pèse-personne peut déterminer la masse M de l'utilisateur U lors d'un pesage, comme une combinaison linéaire des n mesures R1-Rn (n = 4 dans l'exemple considéré ici) effectuées simultanément par les n jauges de contrainte 13, multipliées respectivement par n paramètres de calcul 1n :

$$M = 1 .R1 + 2 .R2 +… + n .Rn.$$

Dans ce cas, on peut déterminer les n paramètres de calcul 1 -n en positionnant successivement une masse connue M0 au moins n fois sur le pèse-personne 1, respectivement en n endroits différents, et en mémorisant à chaque fois les n mesures des jauges de contrainte. La masse M0 étant connue, on obtient ainsi au moins n équations à n inconnues (les paramètres de calcul 1 -n). La résolution de ce système d'équations linéaires, permet à l'unité centrale 12 du pèse-personne de calculer les n paramètres de calcul 1 -n.

Si cette étape d'étalonnage est effectuée par l'utilisateur, ledit utilisateur peut être guidé dans ce processus par des indications données par exemple par l'écran la du pèse-personne.

On notera que, lorsque l'étape d'étalonnage comporte plus que n pesées de la masse prédéterminée M0, cette étape d'étalonnage peut également permettre de vérifier que les jauges de contrainte 13 du pèse-personne peuvent être considérées comme des jauges minces dont la mesure résistance Ri varie linéairement avec la force subie Fi.

On notera que ce mode d'étalonnage peut être utilisé lorsque la masse M de l'utilisateur est calculée par une loi quelconque (y compris non linéaire) en fonction des mesures des jauges de contrainte 13.

**Etapes initiales d'association**

Avant toute utilisation du pèse-personne 1, il est nécessaire de l'intégrer au réseau local sans fil, et d'intégrer également à ce réseau local sans fil le terminal mobile 2, tout au moins lorsque le pèse-personne 1 et le terminal mobile 2 communiquent en utilisant uniquement le réseau local sans fil.

L'intégration du pèse-personne 1 dans le réseau local sans fil peut s'effectuer par association avec la plateforme 4, soit de façon purement automatique, soit en imposant à l'utilisateur des manipulations sur le pèse-personne 1 au moyen du bouton 1b et/ou d'autres boutons (non représentés) appartenant à ce pèse-personne, de façon que le pèse-personne 1 communique en WIFI avec la plateforme 4.

A l'issue de cette première étape d'association, le pèse personne 1 communique par le réseau local sans fil avec la plateforme 4, laquelle communique elle-même avec le serveur 6 par l'intermédiaire du réseau Internet 5.

De la même façon, le terminal mobile 2 peut entrer dans le réseau local sans fil par association avec la plateforme 4, de façon classique, ce qui permet ainsi au terminal mobile de dialoguer avec la plateforme 4, en mode WIFI dans l'exemple considéré ici.

En complément ou en variante, on peut associer directement le pèse-personne 1 avec le terminal mobile 2, de façon qu'ils dialoguent directement entre eux.

A cet effet on peut avantageusement procéder comme suit :

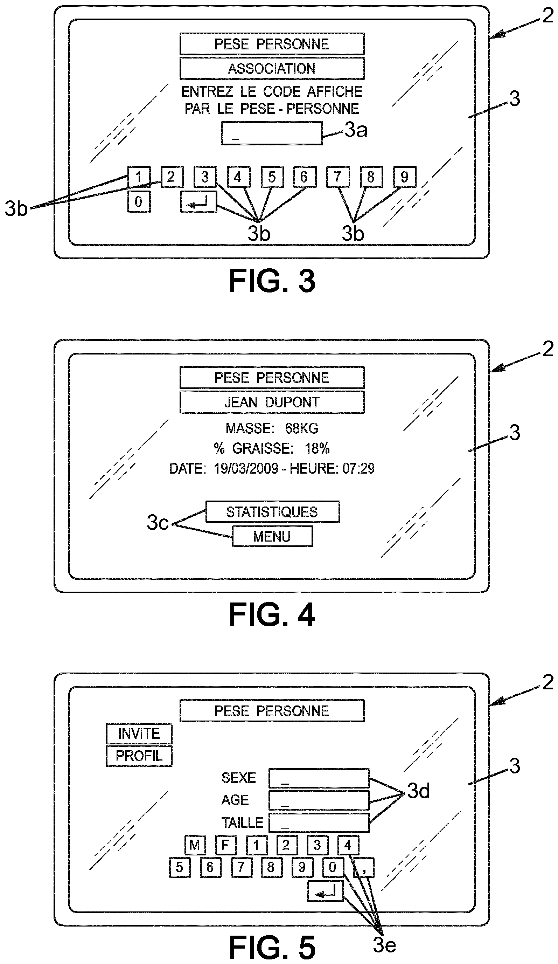

- l'utilisateur appuie sur le bouton d'association 1b du pèse-personne ;
- en réponse à l'actionnement de ce bouton 1b, l'unité centrale 12 du pèse-personne fait afficher sur son écran la un code, par exemple un code aléatoire, et avantageusement un code comportant peu de caractères (par exemple 4 chiffres) ;
- simultanément l'utilisateur U lance sur son terminal mobile une application "pèse-personne" et choisit dans un menu, une option "association" qui lui permet par exemple de faire afficher une page écran telle que celle représentée sur la figure 3, permettant à l'utilisateur de rentrer le code affiché sur l'écran la du pèse-personne dans un champ 3a de la page écran, l'entrée de ce code pouvant s'effectuer par exemple au moyen de touches virtuelles 3b affichées par l'écran tactile 3 ;
- le code saisi par l'utilisateur est transmis par le terminal mobile 2 au serveur 6, directement par le réseau Internet 5, grâce à la liaison UMTS ou similaire du terminal mobile ;
- le code affiché par l'écran la du pèse-personne 1 est transmis au même serveur 6 par le pèse-personne, par l'intermédiaire de la plateforme 4 et du réseau Internet 5 ;
- le serveur 6 compare les deux codes et en cas de correspondance, donne instructions au terminal mobile 2 et au pèse-personne 1 de s'associer pour dialoguer ensemble dans le réseau local sans fil WIFI.

On peut ainsi obtenir une communication bidirectionnelle directe en mode WIFI entre le pèse-personne 1 et le terminal mobile 2.

On notera que la communication bidirectionnelle entre le pèse-personne 1 et le terminal mobile 2 pourrait être obtenue de diverses autres façons dans le cadre de la présente invention, par exemple :

- en faisant communiquer le pèse-personne 1 et le terminal mobile 2 à l'intérieur du réseau local sans fil, mais par l'intermédiaire de la plateforme 4,
- en faisant communiquer le pèse-personne avec le serveur 6 par l'intermédiaire de la plateforme 4 et du réseau Internet 5, et en faisant communiquer le terminal mobile 2 avec le serveur 6 par la liaison radio distante (UMTS dans l'exemple considéré) du terminal mobile.

**Pesage**

A chaque fois qu'un utilisateur U veut utiliser le pèse-personne 1, il lance l'application "pèse-personne" sur son terminal mobile 2, de façon à activer la communication bidirectionnelle entre le pèse-personne 1 et le terminal mobile 2.

L'utilisateur U monte alors sur le pèse-personne 1, comme représenté en trait plein sur la figure 1, après quoi le pèse-personne 1 enregistre les mesures R1-R4 provenant des jauges de contrainte 13 (en pratique, des mesures de résistance) et des mesures d'impédance corporelle provenant des capteurs d'impédance 14. A partir de ces différentes mesures, l'unité centrale 12 du pèse-personne détermine la masse M de l'utilisateur par la formule susmentionnée M-1R1+2R2+3R3+4R4 (dans le cas considéré ici où le pèse-personne 1 comporte quatre jauges de contraintes).

Par ailleurs, pour traiter les mesures d'impédance provenant des capteurs d'impédance 14, l'unité centrale 12 du pèse-personne utilise des lois de calculs prédéterminées permettant d'obtenir des paramètres tels que le taux de graisse, le taux de matière maigre, le taux d'hydratation, l'indice de masse corporelle, etc. Ces lois prédéterminées sont généralement des lois empiriques dépendant du profil de l'utilisateur, et notamment de son sexe, de son âge et de sa taille.

L'unité centrale 12 peut avoir en mémoire un certain nombre d'utilisateurs habituels du pèse-personne 1 avec leur profil d'utilisateur et les dernières mesures de masse effectuées. L'unité centrale 12 de pèse-personne peut ainsi reconnaître automatiquement l'utilisateur U en train de se servir du pèse-personne, en fonction de la masse mesurée.

En variante, les profils des utilisateurs habituels peuvent être stockés sur la plateforme 4 ou sur le serveur 6 auquel cas, le pèse-personne 1 va rechercher sur l'un de ses appareils le profil d'utilisateur le plus proche de l'utilisateur U en train de se servir du pèse-personne 1.

Une fois déterminé le profil d'utilisateur qui correspond à l'utilisateur U en train de se servir du pèse-personne 1, l'unité centrale 12 du pèse-personne peut utiliser la loi de calcul des données impédancemétriques qui correspond au profil d'utilisateur, et faire afficher par exemple une page d'écran telle que celle de la figure 4, sur l'écran 3 du terminal mobile 2.

Dans cet exemple, l'écran 3 du terminal mobile affiche le nom correspondant au profil d'utilisateur (ici "Jean Dupont"), la masse mesurée (ici 68 kg), au moins un paramètre impédancemétrique calculé lors du pesage, par exemple le taux de graisse (ici 18 %), et la date et l'heure de la mesure (ici le 19 mars 2009 à 7H29).

La page écran affichée sur l'écran 3 comporte également des touches virtuelles 3c de l'écran tactile, par exemple une touche MENU permettant d'accéder par exemple à différentes options d'affichage (notamment pour faire afficher d'autres données de pesage impédancemétriques), et une touche STATISTIQUES permettant d'accéder par exemple à des données statistiques stockées par exemple sur le serveur 6.

Les données de pesage (masse et données impédancemétriques) horodatées, sont transférées au serveur 6 :

- soit par le pèse-personne 1 par l'intermédiaire de la plateforme 4,
- soit par le terminal mobile 2, par l'intermédiaire de la plateforme 4 ou directement par sa liaison radio distante (ici la liaison UMTS).

Avantageusement, lorsque l'application "pèse-personne" est lancée sur le terminal mobile 2, l'écran tactile 3 du terminal mobile peut afficher un bouton virtuel "INVITE" qui, lorsqu'il est actionné par l'utilisateur U, stoppe la recherche automatique d'un profil d'utilisateur préexistant et fait afficher une page d'écran telle que celle représentée sur la figure 5, où l'utilisateur peut entrer des informations sur son sexe, son âge et sa taille dans trois champs 3D, au moyen de touches virtuelles 3e affichées sur l'écran tactile 3 du terminal mobile 2.

Une fois entré le profil d'utilisateur de l'invité, les données impédancemétriques peuvent alors être calculées et affichées avec la masse de l'utilisateur sur l'écran 3 du terminal mobile, comme déjà expliqué précédemment et comme représenté sur la figure 4.

On notera que les donnes de pesage peuvent être consultées par l'utilisateur U sur le terminal 2 non seulement lorsqu'il est sur le pèse-personne 1, mais également lorsqu'il en est éloigné, comme représenté en traits mixtes sur la figure 1. Eventuellement, l'utilisateur U pourrait utiliser le pèse-personne 1 sans son terminal mobile 2, en lisant simplement l'écran la du pèse-personne, puis pourrait consulter plus tard, sur le terminal 2, les données de pesage transmises par le pèse-personne 1.

**Mise à jour du pèse-personne**

Lorsque le pèse-personne 1 est en fonctionnement et communique avec la plateforme 4, le serveur 6 peut mettre à jour le logiciel faisant fonctionner le pèse-personne. De la même façon, le serveur 6 peut mettre à jour l'application "pèse-personne" fonctionnant sur le terminal mobile 2.

Ces mises à jour peuvent porter soit sur le code des logiciels en question, soit sur certains paramètres de calcul de la masse de l'utilisateur ou des données impédancemétriques calculées à partir des mesures d'impédance.

Ainsi, les paramètres i de calcul de la masse de l'utilisateur, peuvent être mis à jour de temps à autre en fonction de l'âge du pèse-personne 1, à partir de données statistiques relatives aux pèse-personnes en service, provenant par exemple de données issues du service après-vente et permettant de modéliser le vieillissement des jauges de contrainte du pèse-personne 1.

De la même façon, le serveur 6 peut mettre à jour dans la mémoire de l'unité centrale 12 du pèse-personne 1, les lois de calcul permettant de déterminer les données impédancemétriques en fonction des mesures d'impédance en fonction du profil d'utilisateur, ces mises à jour pouvant intervenir par exemple à l'occasion d'avancées scientifiques permettant des progrès dans lesdites lois de calcul.

Par ailleurs, lorsque l'étape initiale d'étalonnage de la balance est effectuée en usine, en un site correspondant à une valeur g0 d'accélération de la pesanteur, il est possible de mettre à jour les paramètres de calcul i de la masse de l'utilisateur en fonction de la localisation géographique du pèse-personne 1.

A cet effet, le serveur 6 peut par exemple localiser géographiquement le pèse-personne 1 en utilisant des fonctionnalités de géolocalisation du réseau Internet 5, par exemple simplement en fonction de l'adresse IP du pèse-personne 1. En variante, cette géolocalisation peut intervenir en utilisant des fonctionnalités de géolocalisation de la liaison radio distante utilisée par le terminal mobile 2, par exemple si cette liaison est une liaison UMTS.

En fonction de la localisation géographique du pèse-personne 1, le serveur 6 peut envoyer au pèse-personne 1 un paramètre correcteur g/g0 ou g est la valeur d'accélération de la pesanteur à l'emplacement où se trouve le pèse-personne 1, auquel cas le pèse-personne 1 corrige les paramètres initiaux i0 de calcul de masse par des paramètres de calcul corrigés i=i0*g/g0. On peut ainsi obtenir des mesures plus précises de la masse de l'utilisateur U en utilisant ces paramètres corrigés, dans la formule susmentionnée M = 1.R1 + 2.R2 + 3.R3 + 4.R4).

Enfin, l'horloge interne de l'unité centrale 12 du pèse-personne peut être mise à jour automatiquement, par exemple à chaque mise en service du pèse-personne ou à intervalle de temps régulier, par exemple en utilisant des fonctionnalités de mise à l'heure disponibles sur le réseau de communication avec lequel communique le pèse-personne, c'est-à-dire le réseau local sans fil et/ou le réseau Internet 5.

## Revendications

1. **Procédé** de pesage utilisant un pèse-personne électronique (1) communiquant avec un terminal mobile de télécommunication (2) doté d'un écran d'affichage (3), le pèse-personne (1) et le terminal mobile (2) communiquant tous deux par voie hertzienne avec un réseau de télécommunication, ledit réseau de télécommunication étant adapté pour faire communiquer au moins le terminal mobile (2) avec au moins un dispositif de télécommunication supplémentaire (4, 6), le procédé comprenant les étapes suivantes :

   **(a)** au moins une étape de **pesée** au cours de laquelle le pèse-personne (1) effectue au moins une mesure représentative au moins de la masse de l'utilisateur,

   **(b)** au moins une étape de **communication bidirectionnelle** au cours de laquelle : - un utilisateur (U) entre des données dans le terminal mobile (2), et le terminal mobile transmet lesdites informations au pèse-personne (1) par l'intermédiaire du réseau de télécommunication ; - le pèse-personne (1) transmet au terminal mobile (2), des données de pesage fonction de ladite mesure, par le réseau de télécommunication,

   **(c)** et au moins une étape d'affichage au cours de laquelle, le terminal mobile (2) affiche sur l'écran (3), des informations fonction des données de pesage transmises à l'étape de communication, **caractérisé en ce que** dans l'étape de communication, au cours de l'étape de pesée, le pèse-personne (1) cherche à faire correspondre **automatiquement l'utilisateur** avec au moins **un profil d'utilisateur** prédéterminé pour déterminer lesdites données de pesage en utilisant au moins une loi prédéterminée dépendant du profil d'utilisateur.

2. Procédé selon la revendication 1, dans lequel :

   - au cours de l'étape de pesée (a), on effectue également une mesure impédancemétrique sur l'utilisateur (U),
   - au cours de l'étape de communication, les données entrées par l'utilisateur (U) dans le terminal mobile (2) comprennent un profil d'utilisateur et les données de pesage transmises par le pèse-personne (1) au terminal mobile (2) comprennent une masse et des données impédancemétriques fonction du profil d'utilisateur.

3. Procédé selon la revendication 2, dans lequel le profil d'utilisateur comprend l'âge, la taille et le sexe de l'utilisateur.

4. Procédé selon l'une quelconque des revendications précédentes, dans lequel :

   - au cours de l'étape de communication (b), le pèse-personne (1) transmet au terminal mobile (2), en temps réel, lesdites données de pesage fonction de ladite mesure, par le réseau de télécommunication,
   - et au cours de l'étape d'affichage (d), le terminal mobile (2) affiche en temps réel sur l'écran (3), pendant que l'utilisateur (U) est sur le pèse-personne (1), lesdites informations fonction des données de pesage transmises à l'étape de communication montante.

5. Procédé selon l'une quelconque des revendications précédentes, dans lequel le terminal mobile (2) utilisé est un téléphone mobile.

6. Procédé selon l'une quelconque des revendications précédentes, dans lequel :

- le réseau de télécommunication comprend au moins un réseau local sans fil auquel appartient le pèse-personne,
- le réseau local comporte en outre une plateforme (4) qui communique au moins avec le pèse-personne (1),
et au cours de l'étape de communication, le pèse-personne (1) transmet lesdites données de pesage au terminal mobile (2) par l'intermédiaire de la plateforme (4).
- ledit réseau de télécommunication comporte en outre un réseau distant (5) distinct du réseau local sans fil, la plateforme (4) communique avec au moins un serveur (6) par l'intermédiaire dudit réseau distant, le terminal mobile communiquant également avec ledit serveur (6) par l'intermédiaire du réseau distant (5),
et au cours de l'étape de communication, le pèse-personne (1) transmet lesdites données de pesage au terminal mobile (2) par l'intermédiaire de la plateforme (4) et dudit serveur (6), par ledit réseau distant (5).

7. Procédé selon la revendication 6, dans lequel, au cours de l'étape de communication, le serveur (6) transmet des informations supplémentaires au terminal mobile (2) en plus desdites données de pesage, par ledit réseau distant (5).

8. Procédé selon l'une quelconque des revendications précédentes, dans lequel, au cours de l'étape de communication, si l'utilisateur n'est pas un utilisateur habituel du pèse-personne (1), ledit utilisateur s'identifie comme invité sur le terminal mobile (2) et le pèse-personne cesse alors de rechercher à faire correspondre automatiquement l'utilisateur avec un profil d'utilisateur prédéterminé.

9. Procédé selon la revendication 8, dans lequel, si ledit utilisateur s'identifie comme invité sur le terminal mobile (2), alors le terminal mobile lui propose de sélectionner un profil d'utilisateur dans une liste préexistante, et après choix d'un profil d'utilisateur, ce profil est transmis au pèse-personne (1) pour déterminer lesdites données de pesage en utilisant au moins une loi prédéterminée dépendant du profil d'utilisateur sélectionné.

10. Procédé selon l'une quelconque des revendications 6 et 7, comportant au moins une étape de mise à jour au cours de laquelle le serveur (6) met à jour un logiciel dans le pèse-personne (1).

11. Procédé selon la revendication 10, dans lequel les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure,
et au cours de ladite étape de mise à jour, le serveur (6) localise géographiquement le pèse-personne en utilisant des fonctionnalités de géolocalisation du réseau distant (5), et met à jour ledit paramètre de calcul de la masse de l'utilisateur en fonction de ladite localisation géographique.

12. Procédé selon l'une quelconque des revendications 6 et 7, dans lequel les données de pesage comprennent la masse de l'utilisateur, calculée en utilisant au moins un paramètre de calcul de la masse de l'utilisateur à partir de ladite mesure représentative de la masse de l'utilisateur au cours de l'étape de mesure, ladite mesure représentative de la masse de l'utilisateur étant effectuée par au moins une jauge de contrainte (13) appartenant au pèse-personne,
et au cours de ladite étape de mise à jour, le serveur (6) met à jour ledit paramètre de calcul de la masse de l'utilisateur en fonction de données statistiques relatives aux pèse-personnes (1) en service.

13. Procédé selon l'une quelconque des revendications 6 et 7, dans lequel les données de pesage comprennent des données impédancemétriques calculées à partir de mesures d'impédance effectuées par le pèse-personne, en utilisant au moins une loi de calcul prédéterminée, et au cours de ladite étape de mise à jour, le serveur (6) met à jour ladite loi de calcul .

14. **Dispositif de pesage** comprenant :

- un **pèse-personne** électronique (1) adapté pour effectuer au moins une mesure représentative d'au moins la masse d'un utilisateur (U) placé sur ledit pèse-personne,
- un **terminal mobile** (2) de télécommunication doté d'un écran d'affichage (3),

le pèse-personne (1) et le terminal mobile (3) **communiquant** tous deux par voie hertzienne avec un réseau de télécommunication adapté pour faire communiquer au moins le terminal mobile (2) avec au moins un dispositif de télécommunication supplémentaire (4, 6),
le pèse-personne (1) étant adapté pour transmettre au terminal mobile (2) des données de pesage fonction de ladite mesure, par le réseau de télécommunication,
et le terminal mobile (2) étant adapté pour :

- transmettre au pèse-personne (1), par l'intermédiaire du réseau de télécommunication, des données entrées dans le terminal mobile (2) par l'utilisateur (U),
- et afficher sur l'écran (3), des informations fonction des données de pesage transmises par le pèse-personne (1), **caractérisé en ce que** le le pèse-personne (1) est *adapté pour chercher à faire correspondre automatiquement l'utilisateur avec au moins un profil d'utilisateur prédéterminé pour déterminer lesdites données de pesage en utilisant au moins une loi prédéterminée dépendant du profil d'utilisateur.*

15. Dispositif selon la revendication 14, dans lequel le terminal mobile (2) est adapté pour permettre à l'utilisateur de s'identifier comme *invité* si l'utilisateur n'est pas un utilisateur habituel du pèse-personne (1), et le pèse-personne est adapté pour cesser alors de rechercher à faire correspondre automatiquement l'utilisateur avec un profil d'utilisateur prédéterminé.

**Patentansprüche**

1. Verfahren zum Wägen unter Verwendung einer elektronischen Personenwaage (1), die mit einem mobilen Telekommunikationsendgerät (2), das mit einem Anzeigebildschirm (3) ausgestattet ist, kommunizieren kann, wobei sowohl die Personenwaage (1) wie auch das mobile Endgerät (2) mittels elektromagnetischer Wellen mit einem Telekommunikationsnetz kommunizieren können, wobei das Telekommunikationsnetz angepasst ist, zumindest das mobile Endgerät (2) mit mindestens einer zusätzlichen Telekommunikationsvorrichtung (4,6) kommunizieren zu lassen, wobei das Verfahren die folgenden Schritte aufweist:

   (a) mindestens einen Wägungsschritt, im Verlaufe dessen die Personenwaage (1) mindestens eine Messung durchführt, die zumindest für die Masse des Benutzers repräsentativ ist,
   (b) mindestens einen bidirektionalen Kommunikationsschritt, im Verlaufe dessen:

      - ein Benutzer (U) Daten in das mobile Endgerät (2) eingibt und das mobile Endgerät die Informationen über das Telekommunikationsnetz zu der Personenwaage (1) sendet;
      - die Personenwaage (1) Wägungsdaten der entsprechenden Messung über das drahtlose lokale Netzwerk zu dem mobilen Endgerät (2) sendet, und

   (c) mindestens einen Anzeigeschritt, im Verlaufe dessen das mobile Endgerät (2) im Kommunikationsschritt gesendete, die Wägungsdaten betreffende Informationen auf dem Bildschirm (3) anzeigt,

**dadurch gekennzeichnet, dass** in dem Kommunikationsschritt im Verlaufe des Wägungsschritts die Personenwaage (1) versucht, dem Benutzer automatisch mindestens ein vorgegebenes Benutzerprofil zuzuordnen, um unter Verwendung mindestens eines vorgegebenen und von dem Benutzerprofil abhängigen Gesetzes die Wägungsdaten zu bestimmen.

2. Verfahren nach Anspruch 1, in welchem:

   - im Verlaufe des Wägungsschritts (a) auch eine impedanzmetrische Messung an dem Benutzer (U) vorgenommen wird,
   - im Verlaufe des Kommunikationsschritts die von dem Benutzer (U) in das mobile Endgerät (2) eingegebenen Daten ein Benutzerprofil aufweisen und die von der Personenwaage (1) zu dem mobilen Endgerät (2) gesendeten Wägungsdaten eine Masse und impedanzmetrische Daten des entsprechenden Benutzerprofils aufweisen.

3. Verfahren nach Anspruch 2, in welchem das Benutzerprofil das Alter, die Größe und das Geschlecht des Benutzers aufweist.

4. Verfahren einem der vorstehenden Ansprüche, in welchem:

   - im Verlaufe des Kommunikationsschritts (b) die Personenwaage (1) die Wägungsdaten der entsprechenden Messung in Echtzeit über das Telekommunikationsnetz zu dem mobilen Endgerät (2) sendet, und
   - im Verlaufe des Anzeigeschritts (d) das mobile Endgerät (2) in Echtzeit, während der Benutzer (U) auf der Personenwaage (1) ist, die im Kommunikationsschritt aufwärts gesendeten, die Wägungsdaten betreffenden Informationen auf dem Bildschirm (3) anzeigt.

5. Verfahren nach einem der vorstehenden Ansprüche, in welchem das verwendete mobile Endgerät (2) ein Mobiltelefon ist.

6. Verfahren nach einem der vorstehenden Ansprüche, in welchem:

   - das Telekommunikationsnetz mindestens ein drahtloses lokales Netzwerk aufweist, zu welchem die Personenwaage gehört,
   - das lokale Netzwerk außerdem eine Plattform (4) aufweist, die zumindest mit der Personenwaage (1) kommuniziert, und im Verlaufe des Kommunikationsschritts die Personenwaage (1) die Wägungsdaten über die Plattform (4) zu dem mobilen Terminal (2) sendet,
   - das Telekommunikationsnetz außerdem ein von dem drahtlosen lokalen Netzwerk verschiedenes Femnetzwerk (5) aufweist, die Plattform (4) über das Femnetzwerk mit mindestens einem Server (6) kommuniziert, das mobile Endgerät über das Femnetzwerk (5) ebenfalls mit dem Server (6) kommuniziert, und im Verlaufe des Kommunikationsschritts die Personenwaage (1) die Wägungsdaten über die Plattform (4) und den Server (6) über das Fernnetzwerk (5) zu dem mobilen Endgerät (2) sendet.

7. Verfahren nach Anspruch 6, in welchem im Verlaufe des Kommunikationsschritts der Server (6) über das Fernnetzwerk (5) weitere Informationen zu dem mobilen Endgerät (2) zusätzlich zu den Wägungsdaten sendet.

8. Verfahren nach einem der vorstehenden Ansprüche, in welchem im Verlaufe des Kommunikationsschritts für den Fall, dass der Benutzer nicht der übliche Benutzer der Personenwaage (1) ist, der Benutzer sich als Gast an dem mobilen Endgerät (2) identifiziert, und die Personenwaage dann den Versuch einer automatischen Zuordnung des Benutzers zu einem vorgegebenen Benutzerprofil beendet.

9. Verfahren nach Anspruch 8, in welchem für den Fall, dass sich der Benutzer als Gast an dem mobilen Endgerät (2) identifiziert, das mobile Endgerät ihm dann vorschlägt, aus einer vorliegenden Liste ein Benutzerprofil auszuwählen, und nach Auswahl eines Benutzerprofils dieses Profil zu der Personenwaage (1) gesendet wird, um unter Verwendung mindestens eines vorgegebenen Gesetzes, das von dem ausgewählten Benutzerprofil abhängig ist, die Wägungsdaten zu bestimmen.

10. Verfahren nach einem der Ansprüche 6 und 7, mit mindestens einem Aktualisierungsschritt, im Verlaufe dessen der Server (6) eine Software in der Personenwaage (1) aktualisiert.

11. Verfahren nach Anspruch 10, in welchem die Wägungsdaten die Masse des Benutzers aufweisen, die unter Verwendung mindestens eines Benutzermasse-Berechnungsparameters ausgehend von der Messung, die repräsentativ für die Masse des Benutzers ist, im Verlaufe des Messungsschritts berechnet worden ist, und im Verlaufe des Aktualisierungsschritts der Server (6) unter Verwendung von Geolokalisationsfunktionen des Fernnetzwerks (5) die Personenwaage geographisch lokalisiert und abhängig von der geographischen Lokalisation den Benutzermasse-Berechnungsparameter aktualisiert.

12. Verfahren nach einem der Ansprüche 6 und 7, in welchem die Wägungsdaten die Masse des Benutzers aufweisen, die unter Verwendung mindestens eines Benutzermasse-Berechnungsparameters ausgehend von der Messung, die repräsentativ für die Masse des Benutzers ist, im Verlaufe des Messungsschritts berechnet worden ist, wobei die für die Masse des Benutzers repräsentative Messung mit Hilfe mindestens einer Dehnungseinrichtung (13), die zu der Personenwaage gehört, durchgeführt wird, und im Verlaufe des Aktualisierungsschritts der Server (6) als Funktion von statistischen Daten, die sich auf die in Betrieb befindlichen Personenwaagen (1) beziehen, den Benutzermasse-Berechnungsparameter aktualisiert.

13. Verfahren nach einem der Ansprüche 6 und 7, in welchem die Wägungsdaten impedanzmetrische Daten aufweisen, die aus von der Personenwaage durchgeführten Impedanzmessungen unter Verwendung mindestens eines vorgegebenen Berechnungsgesetzes berechnet worden sind, und im Verlaufe des Aktualisierungsschritts der Server (6) das Berechnungsgesetz aktualisiert.

14. Wägungsvorrichtung mit:

- einer elektronischen Personenwaage (1), die angepasst ist, mindestens eine Messung durchzuführen, die zumindest für die Masse eines auf der Personenwaage angeordneten Benutzers (U) repräsentativ ist,
- einem mobilen Telekommunikationsendgerät (2), das mit einem Anzeigebildschirm (3) ausgestattet ist,

wobei sowohl die Personenwaage (1) wie auch das mobile Endgerät (3) mittels elektromagnetischer Wellen mit einem Telekommunikationsnetz kommunizieren können, das angepasst ist, zumindest das mobile Endgerät (2) mit mindestens einer zusätzlichen Telekommunikationsvorrichtung (4,6) kommunizieren zu lassen, wobei die Personenwaage (1) angepasst ist, Wägungsdaten der entsprechenden Messung über das Telekommunikationsnetz zu dem mobilen Endgerät (2) zu senden, und das mobile Endgerät (2) angepasst ist:

- von dem Benutzer (U) in das mobile Endgerät (2) eingegebene Daten über das Telekommunikationsnetzwerk zu der Personenwaage (1) zu senden,
- und von der Personenwaage (1) gesendete, die Wägungsdaten betreffende Informationen auf dem Bildschirm (3) anzuzeigen,

**dadurch gekennzeichnet, dass**
die Personenwaage (1) angepasst ist, zu versuchen, dem Benutzer automatisch mindestens ein vorgegebenes Benutzerprofil zuzuordnen, um unter Verwendung mindestens eines vorgegebenen und von dem Benutzerprofil abhängigen Gesetzes die Wägungsdaten zu bestimmen.

15. Vorrichtung nach Anspruch 14, in welcher das mobile Endgerät (2) angepasst ist, dem Benutzer zu erlauben, sich als Gast zu identifizieren, für den Fall, dass der Benutzer nicht der übliche Benutzer der Personenwaage (1) ist, und die Personenwaage angepasst ist, dann den Versuch einer automatischen Zuordnung des Benutzers zu einem vorgegebenen Benutzerprofil zu beenden.

**Claims**

1. Weighing method using an electronic body weighing scale (1) communicating with a mobile telecommunication terminal (2) equipped with a display screen (3), the body weighing scale (1) and mobile terminal (2) both communicating by Hertzian waves with a telecommunication network, said telecommunication network being configured to enable at least the mobile terminal (2) to communicate with at least one supplementary telecommunication device (4, 6), the method comprising the following steps:

   (a) at least one weighing step during which the body weighing scale (1) takes at least one measurement representative of at least the user's weight,
   (b) at least one two-way communication step during which:

      - a user (U) enters data in the mobile terminal (2) and the mobile terminal transmits said information to the body weighing scale (1) via the telecommunication network,
      - the body weighing scale (1) transmits weighing data based on said measurement to the mobile terminal (2) via said telecommunication network ,
      - the weighing scale (1) transmits weighing data based on said measurement to the mobile terminal (2) via said telecommunication network,

   (c) and at least one display step during which the mobile terminal (2) displays on the screen (3) informations based on the weighing data transmitted during the communication step,

   **characterized in that** during the weighing step the body weighing scale (1) automatically searches for a match between the user and at least one predetermined user profile in order to determine said weighing data using at least one predetermined rule dependant on user profile .

2. Method as claimed in claim 1, wherein:

   - during weighing step (a), a bioelectrical impedance measurement is also taken of the user (U),
   - during the communication step, the data entered in the mobile terminal (2) by the user (U) comprises a user profile and the weighing data transmitted by the body weighing scale (1) to the mobile terminal (2) comprises a weight and bioelectrical impedance data based on the user profile.

3. Method according to claim 2, wherein the user profile comprise electronic body weighing scale (1) the age, height, and gender of the user.

4. Method as claimed in any one of the preceding claims, wherein:

   - during communication step (b), the body weighing scale (1) transmits to the mobile terminal (2) said weighing data based on said measurement via the telecommunication network in real time,
   - and during display step (d), the mobile terminal (2) displays in real time on the screen (3), whilst the user (U) is on the body weighing scale (1), said information based on the weighing data transmitted during the upload communication step.

5. Method as claimed in any one of the preceding claims, wherein the mobile terminal (2) used is a mobile telephone.

6. Method according to any one of the above claims, wherein

   - the telecommunication network comprises at least one wireless local area network to which the scale belongs,
   - the local area network additionally comprises a platform (4) which communicates with at least the scale (1), and during the communication step, the scale (1) transmits said weighing data to the mobile terminal (2) by means of the platform (4),
   - said telecommunication network additionally comprises a wide area network (5) distinct from the wireless local area network, the platform (4) communicating with at least one server (6) by means of said wide area network, said mobile terminal also communicating with said server (6) by means of the wide area network (5),

and during the communication step, the scale (1) transmits said weighing data to the mobile terminal (2) by means of said platform (4) and said server (6), by means of said wide area network(5).

7. Method according to claim 6, wherein, during the communication step, the server (6) transmits supplementary information to the mobile terminal (2) in addition to said weighing data, over said wide area network (5).

8. Method according to any one of the above claims, wherein, during the communication step, if the user is not a regular user of the scale (1), said user is identified as a guest on the mobile terminal (2) and the scale then stops automatically attempting to establish a correspondence between the user and a predetermined user profile.

9. Method as claimed in claim 8, wherein if said user is identified as a guest on the mobile terminal (2), the mobile terminal then prompts him/her to select a user profile from a pre-existing list and after a user profile has been selected, this profile is transmitted to the body weighing scale (1) in order to determine said weighing data using at least one predetermined rule dependent on the selected user profile.

10. Method according to any one of claims 6 and 7, comprising at least one updating step during which the server (6) updates software in the body weighing scale (1).

11. Method as claimed in claim 10, wherein the weighing data comprises the user's weight, calculated using at least one user weight calculation parameter based on said measurement representative of the user's weight taken during the measuring step, and during said updating step, the server (6) geographically locates the body weighing scale using geographical locating functions of the remote network (5) and updates said user weight calculation parameter as a function of said geographical location.

12. Method according to any one of claims 6 to 7, wherein the weighing data comprises the user's weight, calculated using at least one user weight calculation parameter based on said measurement representative of the user's weight taken during the measuring step, said measurement representative of the user's weight being taken by means of at least one strain gauge (13) belonging to the body weighing scale, and during said updating step, the server (6) updates said user weight calculation parameter as a function of statistical data relating to body weighing scales (1) in service.

13. Method as claimed in any one of claims 6 and 7, wherein the weighing data comprises bioelectrical impedance data calculated on the basis of impedance measurements taken by the body weighing scale using at least one predetermined calculation rule, and during said updating step, the server (6) updates said calculation rule.

14. Weighing device comprising:

 - an electronic body weighing scale (1) adapted to provide at least one measurement representative of at least the weight of a user (U) positioned on said scale,
 - a mobile telecommunication terminal (2) equipped with a display screen (3),

 said scale (1) and said mobile terminal (3) both communicating by Hertzian waves with a telecommunication network adapted to allow at least the mobile terminal (2) to communicate with at least one supplemental telecommunication device (4, 6), said scale (1) being adapted to transmit weighing data regarding said measurement to the mobile terminal (2), over the telecommunication network, and the mobile terminal (2) being adapted to:

 - transmit to the scale (1), by means of the telecommunication network, data input into the mobile terminal (2) by the user (U),
 - and display, on the screen (3), information regarding the weighing data transmitted by the scale (1),

 **Characterized in that** the electronic scale (1) is adapted to automatically search for a match between the user and at least one predetermined user profile in order to determine said weighing data using at least one predetermined rule dependent on the user profile.

15. Weighing device according to claim 14, wherein the mobile terminal (2) is adapted to allow the user to identify as a guest if the user is not a usual user of the electronic scale (1), and the scale is adapted to then stop automatically attempting to establish a correspondence between the user and a predetermined user profile.

EP 3 062 072 B1

FIG. 1

FIG. 2

PESE PERSONNE

ASSOCIATION

ENTREZ LE CODE AFFICHE
PAR LE PESE - PERSONNE

3a

1 2 3 4 5 6 7 8 9
0 ↵

3b

**FIG. 3**

PESE PERSONNE

JEAN DUPONT

MASSE: 68KG

% GRAISSE: 18%

DATE: 19/03/2009 - HEURE: 07:29

3c — STATISTIQUES

MENU

**FIG. 4**

PESE PERSONNE

INVITE
PROFIL

SEXE ___
AGE ___
TAILLE ___

3d

M F 1 2 3 4
5 6 7 8 9 0 ,
↵

3e

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6781067 B

- EP 1239268 A1